# EUROPÄISCHE PATENTSCHRIFT

(11) **EP 2 270 371 B1**
(45) Veröffentlichungstag und Bekanntmachung des Hinweises auf die Patenterteilung: **10.05.2017**
(21) Anmeldenummer: 10005716.5
(22) Anmeldetag: 02.06.2010
(51) Int. Cl.: F16K 3/02

(54) **Plattenschieber, insbesondere zum Absperren einer Medien führenden Leitung**
Gate valve, in particular for blocking a pipe transporting a medium
Robinet-vanne, notamment destiné à fermer une conduite écoulant un milieu

(30) Priorität: 02.07.2009 CH 10352009
(43) Veröffentlichungstag der Anmeldung: 05.01.2011
(73) Patentinhaber: Sistag AG Absperrtechnik, 6274 Eschenbach (CH)
(72) Erfinder: Sidler, Hans-Jörg, 6274 Eschenbach (CH)
(74) Vertreter: Luchs, Willi

(56) Entgegenhaltungen:
- AT-B- 335 810
- DE-U1-202005 012 832
- US-A- 5 178 180
- US-A1- 2006 255 305
- US-A1- 2007 163 655

## Beschreibung

Die Erfindung bezieht sich auf einen Plattenschieber, insbesondere zum Absperren einer Medien führenden Leitung, gemäss dem Oberbegriff des Anspruches 1.

Plattenschieber dieser Art sind bekannt (siehe beispielsweise DE-U-20 2005 012 832 oder US-A-2006/0255305) und werden beispielsweise in Chemie- oder Lebensmittelindustrie zum Absperren von Leitungen für die verschiedensten Medien eingesetzt, bei denen es sich um flüssige oder gasförmige Stoffe sowie auch um Feststoffe handeln kann, beispielsweise um Treibstoffe, chemische Flüssigkeiten, Granulate, Getreide etc. Die Plattenschieber sind jeweils mit einem eine Durchgangsöffnung aufweisenden Gehäuse und mit einer im Gehäuse quer zur Durchgangsöffnung verschiebbar geführten Schieberplatte versehen, die mittels eines Antriebsmechanismus aus einer Öffnungsstellung in eine die Durchgangsöffnung dichtend sperrende Schliessstellung verstellbar ist. Zu beiden Seiten der Schieberplatte ist quer zu ihrer Verstellrichtung je eine Querdichtung in je einer Nut im Gehäuse oberhalb der Durchgangsöffnung angeordnet.

In der Druckschrift US-A-2007/0163655 ist ein Plattenverschluss mit einer Schieberplatte geoffenbart, welche eine dreischichtige Lage auf der einen Seite aufweist. Es sollen dabei eine reibungsarme Schicht, z.B. PTFE, und Schichten aus TiN. CrN. TiAl oder anderen gehärteten Materialien verwendet werden.

Die Plattenschieber müssen insbesondere bei Verwendung auf den Gebieten, wo eine Brandgefahr besteht - sowohl von innen als auch von aussen - hohen Kriterien bezüglich der Feuersicherheit entsprechen.

Der vorliegenden Erfindung liegt die Aufgabe zugrunde, einen Plattenschieber der eingangs genannten Art zu schaffen, der die hohen Anforderungen bezüglich der Feuersicherheit erfüllt.

Diese Aufgabe wird erfindungsgemäss durch einen Plattenschieber mit den Merkmalen des Anspruches 1 gelöst.

Weitere bevorzugte Ausgestaltungen des erfindungsgemässen Plattenschiebers bilden den Gegenstand der abhängigen Ansprüche.

Dadurch, dass erfindungsgemäss das Gehäuse auf seiner Innen- und Aussenseite sowie auch die Schieberplatte mit mindestens einer eine Temperaturbarriere bildenden Schicht versehen sind und die Querdichtung aus einer hochtemperaturbeständigen Schicht bzw. Dichtmasse besteht, wird die Gefahr einer Leckage zu Atmosphäre und/oder im Durchgang beim Brand oder bei Löscharbeiten wesentlich vermindert.

Die Erfindung wird nachfolgend anhand der Zeichnung näher erläutert. Es zeigen:
- Fig. 1: ein Ausführungsbeispiel eines erfindungsgemässen Plattenschiebers in Frontansicht;
- Fig. 2: einen Schnitt nach Linie II-II in Fig. 1;
- Fig. 3: einen Teil von Fig. 2 in vergrössertem Massstab; und
- Fig. 4: einen weiteren Teil von Fig. 2 in vergrössertem Massstab.

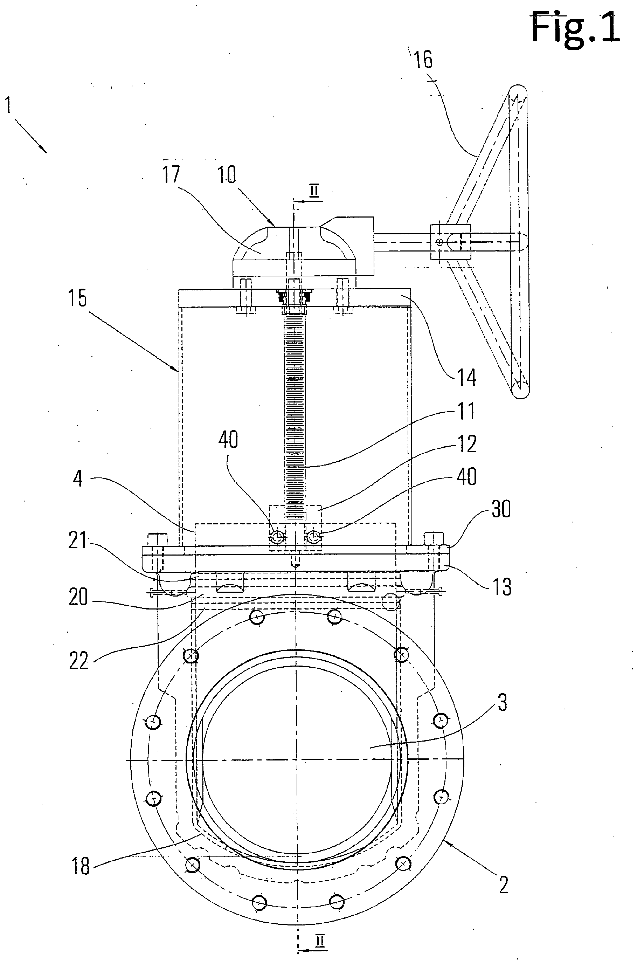

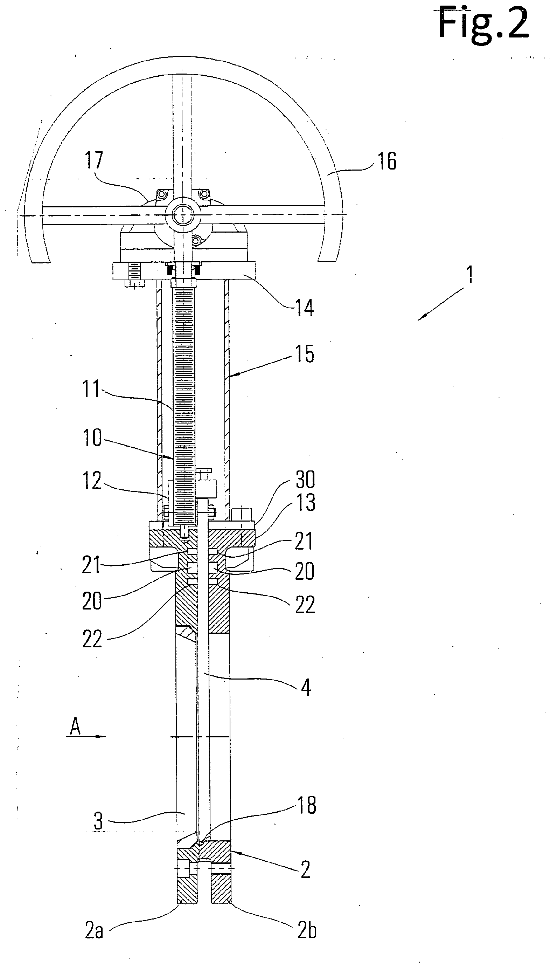

In Fig.1 und Fig. 2 ist ein Plattenschieber 1 dargestellt, der sich insbesondere zum Absperren einer Medien führenden Leitung eignet, wobei es sich bei den Medien um flüssige oder gasförmige Stoffe sowie auch um Feststoffe handeln kann, beispielsweise um Treibstoffe, chemische Flüssigkeiten, Granulate, Getreide und vieles andere mehr.

Der Plattenschieber 1 weist ein mit einer Durchgangsöffnung 3 versehenes, zwei Gehäuseteile 2a, 2b umfassendes Gehäuse 2 auf, in welchem eine Schieberplatte 4 quer zur Durchgangsöffnung 3 bzw. Hauptdurchflussrichtung A gemäss Fig. 2 verschiebbar gelagert ist. Die Schieberplatte 4 ist mittels eines Antriebsmechanismus 10 aus einer Öffnungsstellung in eine die Durchgangsöffnung 3 dichtend sperrende Schliessstellung verstellbar. Gemäss Fig. 1 und 2 befindet sich die Schieberplatte 4 in der Schliessstellung.

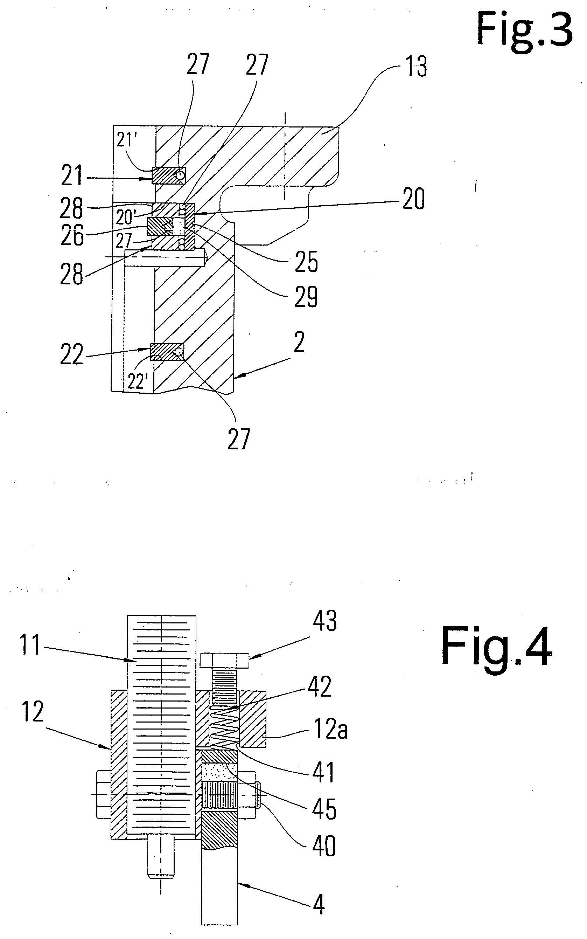

Der Antriebsmechanismus 10 umfasst eine Antriebsspindel 11 mit einer darauf verstellbaren Spindelmutter 12, die mit der Schieberplatte 4 in Verbindung steht, wie noch weiter unten anhand von Fig. 4 näher erläutert wird. Die Antriebsspindel 11 ist in einem oberen Aufbauflansch 13 des Gehäuses 2 einerseits und in einem Deckteil 14 einer auf den Aufbauflansch 13 aufgesetzten, geschlossenen Haube 15 anderseits drehbar gelagert. Der Antriebsspindel 11 wird von einem manuell betätigbaren Antriebsrad 16 über ein Kegelradgetriebe 17 (beispielsweise mit einer 3:1 Übersetzung) eine Drehbewegung erteilt, die die Verstellung der Spindelmutter 12 und somit auch die Verstellung der Schieberplatte 4 bewirkt.

Im Prinzip kann aber auch ein Antrieb vorgesehen sein, der die Spindelmutter 12 oder eine Zug- oder Kolbenstange bewegt. Das Kegelradgetriebe 17 oder ein anderer Antrieb ist in einem mit dem Deckteil 14 der Haube 15 verschraubten, geschlossenen Gehäuse untergebracht.

Um zu vermeiden, dass das Medium zwischen den zwei flachen Gehäuseteilen 2a, 2b und der dazwischen befindlichen Schieberplatte 4 auslaufen kann, ist einerseits eine Dichtschnur 18 rund um die Durchgangsöffnung 3 im Gehäuse 2 eingelegt, anderseits sind zu beiden Seiten der Schieberplatte 4 quer zu ihrer Verstellrichtung längliche Querdichtungen 20, 21, 22 in entsprechenden Nuten im Gehäuse 2 oberhalb der Durchgangsöffnung 3 angeordnet. In einer besonders bevorzugten Weise ist dabei nicht nur je eine Querdichtung zu beiden Seiten der Schieberplatte 4 vorhanden, sondern es sind je drei Querdichtungen 20, 21, 22 in je drei Nuten 20', 21', 22' angeordnet, wie insbesondere aus Fig. 3 ersichtlich und weiter unten noch näher beschrieben.

Damit im Falle eines Brandes - ob nun von innen, über die Leitung sich verbreitend oder von aussen verursacht - der Plattenschieber 1 standhält und Leckagen zu Atmosphäre und/oder im Durchgang sowohl beim Brand als auch bei Löscharbeiten möglichst vermieden werden, werden erfindungsgemäss folgende Massnahmen getroffen.

Es werden sowohl das Gehäuse 2 auf seiner Innen- und Aussenseite als auch die Schieberplatte 4 mit einer eine Temperaturbarriere bildenden Beschichtung versehen. Die Gehäusebeschichtung besteht vorzugsweise aus drei Schichten, nämlich aus einem Haftgrundanstrich, vorzugsweise einem chemisch resistenten und hochtemperaturbeständigen Anstrich, welcher mit katalytischem Epoxy überstreichbar ist, einem anschwellenden Anstrich, vorzugsweise einer katalytischen Zweikomponenten-Epoxyschicht, die als Flammbarriere eine anschwellende isolierende Schicht bei hohen Temperaturen und somit_eine erste Temperaturbarriere bildet, und einer obersten PTFE Schicht mit einem niedrigen Reibungskoeffizient, vorzugsweise einer hochtemperaturbeständigen Mischung aus Barium-Sulfaten und Silikonen, die eine zweite Temperaturbarriere bildet und gute Gleiteigenschaften aufweist.

Auch die Schieberplatte 4 wird mit einer PTFE Schicht mit einem niedrigen Reibungskoeffizient, vorzugsweise einer hochtemperaturbeständigen Mischung aus Barium-Sulfaten und Silikonen beschichtet.

Insbesondere der innenseitige Plattenführungsbereich des Gehäuses 2 (und die Schieberplatte 4 selber) wird einem genauen Finish unterzogen, damit eine ungehinderte Plattenbewegung gewährleistet wird.

Ferner ist die mittlere der bereits erwähnten, zu beiden Seiten der Schieberplatte 4 angeordneten drei Querdichtungen 20, 21, 22 gemäss Fig. 3 als eine Dichtungspackung ausgebildet, die eine Dichtungsschicht 25 aus temperaturbeständigem gewobenen Graphitgarn umfasst. Dieser ist im Innersten der Gehäuse-Nut 20' angeordnet. Die Dichtungspackung enthält ferner eine Profildichtung 26 und eine Stützdichtschnur 27 beide aus einem Elastomer oder Polymer, vorzugsweise aus FKM, der sich durch eine hohe thermische und chemische Beständigkeit auszeichnet. FKM hält Kohlenwasserstoffen wie z.B. Ölen und Treibstoffen auch bei höheren Temperaturen stand, ohne aufzuquellen oder sich aufzulösen.

Zwischen der Profildichtung 26, der Stützdichtschnur 27 einerseits, und der Dichtungsschicht 25 andererseits, ist eine Dichtungsmasse 29 vorgesehen, bei der es sich um eine Mischung von kleinen zerstückelten PTFE-Fäden und/oder Graphit Bestandteilen, sowie hochtemperaturbeständigem synthetischem Mineralölfett handelt. Bei hohen Temperaturen neigt diese Mischung zum Migrieren, d.h. sie wird zähflüssig, formt aber mit dem temperaturbeständigeren gewobenen Graphitgarn eine ideale Einheit zum Dichten unter diesen erhöhten Anforderungen.

Oberhalb und unterhalb der Profildichtung 26 ist je eine weitere, vorzugsweise metallische Dicht- und Schableiste 28, vorzugsweise aus Messing, als Teil der Dichtungspackung vorgesehen, wobei zwischen Dicht- und Schableiste 28 und der Dichtungsschicht 25 jeweils Stützdichtschnüre 27 eingelegt sind.

Bei den oberhalb und unterhalb der Dichtungspackung angeordneten Querdichtungen 21, 22 handelt es sich wiederum um Profildichtungen aus einem Elastomer, vorzugsweise aus FKM oder aus glasfasergefülltem FKM. In den entsprechenden Gehäuse-Nuten 21', 22' ist wiederum jeweils eine Stützdichtschnur 27 eingelegt.

Zur erhöhten Feuersicherheit trägt auch die bereits erwähnte geschlossene Haube 15 aus Stahl, die vorzugsweise aus einzelnen Teilen zusammengeschweisst ist, und die mit ihrem Bodenteil 30 auf den Aufbauflansch 13 aufgesetzt und mit diesem verschraubt ist. Zwischen dem Haubenboden 30 und dem Aufbauflansch 13 ist eine Flachdichtung aus gewobenem Graphitgarn vorgesehen. Auch am Haubendurchgang Antriebsspindel 11/Kegelradgetriebe 17 ist eine beispielsweise aus drei Ringen bestehende Dichtung aus gewobenem Graphitgarn vorhanden. Zwischen dem geschlossenen Gehäuse für das Kegelradgetriebe 17 und dem Deckteil 14 der Haube 15 ist eine Flachdichtung vorzugsweise aus einem hochtemperaturbeständigen und chemisch resistenten Elastomer angeordnet.

Fig. 4 zeigt im Detail die mit der Antriebsspindel 11 wirkverbundene Spindelmutter 12, an der die Schieberplatte 4 mittels Verbindungsschrauben 40 seitlich angebracht ist (vgl. auch Fig. 1). Die Spindelmutter 12 ist mit einer oberen Nase 12a versehen, in deren vertikalen Öffnung 41 eine Feder 42 angeordnet ist, die zwischen einer Stellschraube 43 und der Schieberplatte 4 abgestützt ist und auf die Schieberplatte 4 von oben in der Schliessrichtung einwirkt. Die Schieberplatte 4 weist für die Verbindungsschrauben 40 vertikal gerichtete Langlöcher 45 auf, die mit Vorteil thermo-mechanisch abgesichert, d.h. mit Sicherungsmasse gefüllt sind. So kann sich die Schieberplatte 4 während der Verstellbewegung nicht halb lose bewegen und die Langlöcher 45 können sich nicht mit allfälligem Schmutz füllen. Im Falle eines Brandes brennt die thermo-mechanische Sicherung kontrolliert ab, und die Feder 42 presst die Schieberplatte 4 in den Sitz.

## Patentansprüche

1. Plattenschieber, insbesondere zum Absperren einer Medien führenden Leitung, mit einem eine Durchgangsöffnung (3) aufweisenden Gehäuse (2) und mit einer im Gehäuse (2) quer zur Durchgangsöffnung (3) verschiebbar geführten Schieberplatte (4), die mittels eines Antriebsmechanismus (10) aus einer Öffnungsstellung in eine die Durchgangsöffnung (3) dichtend sperrende Schliessstellung verstellbar ist, wobei zu beiden Seiten der Schieberplatte (4) quer zu ihrer Verstellrichtung je eine Querdichtung (20) in je einer Nut (20') im Gehäuse (2) oberhalb der Durchgangsöffnung (3) angeordnet ist, **dadurch gekennzeichnet, dass**
das Gehäuse (2) auf seiner Innen- und Aussenseite sowie auch die Schieberplatte (4) mit mindestens einer eine Temperaturbarriere bildenden Schicht versehen ist, wobei die Beschichtung am Gehäuse (2) wenigstens einen hochtemperaturbeständigen Anstrich, welcher mit katalytischem Epoxy überstreichbar ist, sowie als die mindestens eine eine Temperaturbarriere bildende Schicht einen anschwellenden Anstrich, vorzugsweise einen katalytischen Zweikomponenten-Epoxyschicht-Anstrich, umfasst, und die Querdichtung (20) als eine Dichtungspackung ausgebildet ist, deren zuinnerst in der Nut angeordnete Dichtungsschicht (25) aus gewobenem Graphitgarn ausgebildet ist, wobei der Antriebsmechanismus (10) eine Antriebsspindel (11) sowie eine die Verstellung der Schieberplatte (4) bewirkende Spindelmutter (12) umfasst, welche Antriebsspindel (11) in einem oberen Aufbauflansch (13) des Gehäuses (2) einerseits und in einem Deckteil (14) einer auf den Aufbauflansch (13) aufgesetzten, geschlossenen Haube (15) anderseits drehbar gelagert ist.

2. Plattenschieber nach Anspruch 1, **dadurch gekennzeichnet, dass** es sich bei der die Temperaturbarriere bildenden Schicht der Schieberplatte (4) um eine PTFE-Schicht mit einem niedrigen Reibungskoeffizient handelt, vorzugsweise einer hochtemperaturbeständigen Mischung aus Barium-Sulfaten und Silikonen, und wobei eine derartige PTFE-Schicht auch als zusätzliche, oberste Schicht am Gehäuse vorgesehen ist.

3. Plattenschieber nach Anspruch 1, **dadurch gekennzeichnet, dass** die Dichtungspackung diese Dichtungsschicht (25) aus gewobenem Graphitgarn, eine Profildichtung (26) mit einer Stützdichtschnur (27), beide aus Elastomer, eine dazwischenliegende Dichtmasse (29) sowie jeweils oberhalb und unterhalb je eine metallische oder kunstoffene Dicht- und Schableiste (28) mit Stützdichtschnüren (27) umfasst.

4. Plattenschieber nach Anspruch 3, **dadurch gekennzeichnet, dass** oberhalb und unterhalb der als Dichtungspackung ausgebildeten Querdichtung (20) zwei weitere Querdichtungen (21, 22) parallel angeordnet und als Elastomer-Profildichtungen ausgebildet sind.

5. Plattenschieber nach Anspruch 1, **dadurch gekennzeichnet, dass** zwischen einem Bodenteil (30) der die Antriebsspindel (11) und die Spindelmutter (12) umschliessenden Haube (15) und dem Aufbauflansch (13) eine Flachdichtung aus gewobenem Graphitgarn vorgesehen ist.

6. Plattenschieber nach Anspruch 1 oder 5, **dadurch gekennzeichnet, dass** die Antriebsspindel (11) von einem manuell betätigbaren Antriebsrad (16) über ein Getriebe (17) drehbeweglich antreibbar ist, wobei das Getriebe (17) in einem mit dem Deckteil (14) verschraubten, geschlossenen Gehäuse untergebracht ist, wobei zwischen dem Gehäuse für das Getriebe (17) und dem Deckteil (14) der Haube (15) eine Flachdichtung vorgesehen ist.

7. Plattenschieber nach Anspruch 6, **dadurch gekennzeichnet, dass** am Haubendurchgang von der Antriebsspindel (11) zum Getriebe (17) mindestens eine Ringdichtung aus gewobenem Graphitgarn vorgesehen ist.

8. Plattenschieber nach Anspruch 1, **dadurch gekennzeichnet, dass** die Schieberplatte (4) über Verbindungsschrauben (40) seitlich an der Spindelmutter (12) angebracht ist und für die Verbindungsschrauben (40) vertikal gerichtete Langlöcher (45) aufweist, wobei in einer oberen Nase (12a) der Spindelmutter (12) eine auf die Schieberplatte (4) von oben in der Schliessrichtung einwirkende Feder (42) vorgesehen ist.

9. Plattenschieber nach Anspruch 8, **dadurch gekennzeichnet, dass** die die Verbindungsschrauben (40) aufnehmenden Langlöcher (45) der Schieberplatte (4) mit einer thermo-mechanischen Sicherungsmasse gefüllt sind.

## Claims

1. Slide valve, in particular for blocking a line conveying media, comprising a housing (2) having a passage opening (3) and comprising a slider plate (4) moveable within the housing (2) at right angles to the passage opening (3) and which can be displaced from an open position into a closed position blocking the passage opening (3) tightly by means of a drive mechanism (10), whereby a lateral seal (20) respectively being disposed in a respective groove (20') in the housing (2) above the passage opening (3) on both sides of the slider plate (4) at right angles to its direction of displacement, **characterised in that**
the inside and outside of the housing (2) as well as the slider plate (4) are provided with at least one layer forming a temperature barrier, wherein the layer on the housing (2) comprises at least a high temperature-resistant coat, which can be over-coated with catalytic epoxy, and the as at least one layer forming a temperature barrier comprises a tumescent coat, preferably a catalytic two-component epoxy layer coat, and the lateral seal (20) is formed as a sealing packing, whose innermost in the groove arranged sealing layer (25) is made of woven graphite yarn, wherein the drive mechanism (10) comprises a drive spindle (11) and a spindle nut (12) bringing about the displacement of the slider plate (4), said drive spindle (11) being rotatably mounted on the one hand in an upper structural flange (13) of the housing (2), and on the other hand in a covering part (14) of a closed hood (15) placed onto the structural flange (13).

2. Slide valve according to Claim 1, **characterised in that** the temperature barrier forming coating of the slider plate (4) is a PTFE layer with a low friction coefficient, preferably a high temperature-resistant mixture of barium sulphates and silicones, and wherein such a PTFE-layer is provided also as additional top layer on the housing.

3. Slide valve according to Claim 1, **characterised in that** the sealing packing comprises this sealing layer (25) made of woven graphite yarn, a profile seal (26) with a supporting rope seal (27), both made of elastomer, a sealing compound (29) lying between the latter and respectively above and below a respective metallic or synthetic sealing bar and scraper (28) with protective rope seals (27).

4. Slide valve according to Claim 3, **characterised in that** two further lateral seals (21, 22) are disposed in parallel above and below the lateral seal (20) in the form of sealing packing and are in the form of elastomer profile seals.

5. Slide valve according to Claim 1, **characterised in that** a flat seal made of woven graphite yarn is provided between a base part (30) of the hood (15) surrounding the drive spindle (11) and the spindle nut (12) and the structural flange (13).

6. Slide valve according to Claim 1 or 5, **characterised in that** the drive spindle (11) can be driven with rotational movement by a manually operable drive wheel (16) via a gear (17), whereby the gear (17) being accommodated in a closed housing screwed together with the covering part (14), whereby a flat seal being provided between the housing for the gear (17) and the covering part (14) of the hood (15).

7. Slide valve according to Claim 6, **characterised in that** at least one ring seal made of woven graphite yarn is provided on the hood passage from the drive spindle (11) to the gear (17).

8. Slide valve according to Claim 1, **characterised in that** the slider plate (4) is attached to the spindle nut (12) on the side by means of connection screws (40) and has vertically directed slots (45) for the connection screws (40), whereby a spring (42) acting on the slider plate (4) from above in the direction of closing being provided in an upper projection (12a) of the spindle nut (12).

9. Slide valve according to Claim 8, **characterised in that** the slots (45) of the slider plate (4) accommodating the connection screws (40) are filled with a thermo-mechanical securing glue.

## Revendications

1. Robinet-vanne notamment pour fermer un conduit de passage de milieux, comprenant un corps (2) ayant une ouverture (3) de passage et une plaque (4) guidée dans le corps (2) de manière à pouvoir coulisser transversalement à l'ouverture (3) de passage, plaque qui peut, au moyen d'un mécanisme (10) d'entraînement, passer d'une position d'ouverture à une position de fermeture, obturant de manière étanche l'ouverture (3) de passage, une étanchéité (20) transversale étant, des deux côtés de la plaque (4) transversalement à sa direction de déplacement, disposée dans respectivement une rainure (20') du corps (2) au-dessus de l'ouverture (3) de passage, **caractérisé en ce que**
le corps (2) est pourvu sur son côté intérieur et son côté extérieur ainsi qu'également la plaque (4) d'au moins une couche formant une barrière à la température, le revêtement du corps (2) comprenant au moins un enduit résistant aux hautes températures et pouvant être enduit d'un époxy catalytique, ainsi que, en tant que la au moins une couche formant une barrière à la température, un enduit gonflant, de préférence un enduit catalytique de couche époxy à deux composants et l'étanchéité (20) transversale est constituée sous la forme d'un paquetage d'étanchéité, dont la couche (25) d'étanchéité disposée le plus à l'intérieur dans la rainure est en fil de graphite tissé, le mécanisme (10) d'entraînement comprenant une broche (11) d'entraînement ainsi qu'un écrou (12) de broche provoquant le déplacement de la plaque (4), laquelle broche (11) d'entraînement est montée tournante dans une bride (13) supérieure de montage du corps (2) d'une part et dans une partie (14) de couvercle d'une hotte (15) fermée et posée sur la bride (13) de montage d'autre part.

2. Robinet-vanne suivant la revendication 1, **caractérisé en ce que** la couche formant une barrière à la température de la plaque (4) est une couche en PTFE ayant un coefficient de frottement petit, de préférence en un mélange résistant aux températures hautes de sulfate de baryum et de silicone et une couche en PTFE de ce genre est prévue également comme couche supplémentaire la plus haute sur le corps.

3. Robinet-vanne suivant la revendication 1, **caractérisé en ce que** le paquetage d'étanchéité comprend cette couche (25) d'étanchéité en fil de graphite tissé, une étanchéité (26) profilée ayant un cordon (27) d'étanchéité de support, tout deux en élastomère, une masse (29) d'étanchéité entre eux, ainsi que respectivement au dessus et en-dessous une baguette (28) métallique ou en matière plastique d'étanchéité et de raclage ayant des cordons (27) d'étanchéité de support.

4. Robinet-vanne suivant la revendication 3, **caractérisé en ce que** au dessus et en dessous de l'étanchéité (20) transversale constituée en paquetage d'étanchéité sont disposées parallèlement deux autres étanchéités (21, 22) transversales constituées en étanchéités profilées en élastomère.

5. Robinet-vanne suivant la revendication 1, **caractérisé en ce qu'**une étanchéité plate en fil de graphite tissé est prévue entre une partie (30) de fond de la hotte (15) entourant la broche (11) d'entraînement et l'écrou (12) de broche et la bride (13) de montage.

6. Robinet-vanne suivant la revendication 1 ou 5, **caractérisé en ce que** la broche (11) d'entraînement peut être entraînée d'une manière mobile en rotation par l'intermédiaire d'une transmission (17) par une roue (16) d'entraînement pouvant être actionnée manuellement, la transmission (17) étant logée dans un carter fermé et vissé à la partie (14) de couvercle, une étanchéité plate étant prévue entre le carter de la transmission (17) et la partie (14) de couvercle de la hotte (15).

7. Robinet-vanne suivant la revendication 6, **caractérisé en ce qu'**au moins une bague d'étanchéité en fil de graphite tissé est prévue à l'endroit où la broche (11) d'entraînement traverse la hotte pour aller à la transmission (17).

8. Robinet-vanne suivant la revendication 1, **caractérisé en ce que** le plaque (4) est montée latéralement sur l'écrou (12) de broche par des vis (40) de liaison et a des boutonnières (45) dirigées verticalement pour les vis (4) de liaison, un ressort (42) agissant sur la plaque (4) par le haut dans le sens de fermeture étant prévu dans un bec (12a) supérieur de l'écrou (12) de broche.

9. Robinet-vanne suivant la revendication 8, **caractérisé en ce que** les boutonnières (45) recevant les vis (40) de liaison de la plaque (4) sont remplies d'une masse de protection thermomécanique.
